# EUROPEAN PATENT APPLICATION

(11) **EP 2 098 307 A1**
(43) Date of publication of application: **09.09.2009**
(21) Application number: 08004191.6
(22) Date of filing: 06.03.2008
(51) Int. Cl.: B08B 7/00

(54) **Distillation system for CO2 dry cleaning machine**

(71) Applicant: Linde AG, 80331 München (DE)
(72) Inventor: Lindqvist, Kenneth Stig, 128 38 Skarpnäck (SE); Ahlbom, Esko, 75654 Uppsala (SE)
(74) Representative: Gellner, Bernd

(57) **Abstract**

The invention relates to a method and a system for cleaning articles in a treatment fluid (3) comprising a densified gas, said system comprising a cleaning chamber, a primary still (1) for distilling said treatment fluid (3) and a secondary still (6) for distilling treatment fluid (3) withdrawn from the primary still (Figure 1).

## Description

The invention relates to a system for cleaning articles in a treatment fluid comprising a densified gas, said system comprising a cleaning chamber and a primary still for distilling said treatment fluid wherein said primary still is connected to said cleaning chamber.

The invention further relates to a method for cleaning articles comprising the steps
- placing said articles in a cleaning chamber
- treating said articles with a treatment fluid comprising a densified gas
- draining at least a part of said treatment fluid from said cleaning chamber and distilling said part of said treatment fluid in a primary still.

Dry cleaning using liquid carbon dioxide is known as an environmentally friendly cleaning technique with favourable cleaning properties. Liquid carbon dioxide dry cleaning can be used to remove contaminants from garments or textiles as well as from metal, machinery, work pieces or other parts.

In a typical carbon dioxide dry cleaning cycle the parts are cleaned in a cleaning chamber which has been filled with liquid carbon dioxide from a storage tank. When the cleaning is finished the liquid carbon dioxide is withdrawn from the cleaning chamber and passed to a still for distillation in order to remove contaminants from the liquid carbon dioxide. The distilled carbon dioxide is then returned to the storage tank for later use.

During distillation in the still carbon dioxide is vaporised whereas the contaminants and the waste drop down to the bottom. The carbon dioxide gas can be blown out of the still and transferred back to the storage tank. The waste is drained from the still to a waste receptacle. However, during distillation not all of the liquid carbon dioxide evaporates. Thus, when draining the still non-vaporised liquid carbon dioxide is also directed to the waste receptacle. The drained liquid carbon dioxide often evaporates within the drain line and causes a rapid pressure increase in the drain line and in the waste receptacle.

Due to the fast pressure increase waste could be blown out of the waste receptacle through the waste receptacle exhaust pipe.

It is an object of the invention to provide a system and a method for improved distillation of treatment fluid which has been used in a CO₂ dry cleaning system.

This object is achieved by a system for cleaning articles in a treatment fluid comprising a densified gas, said system comprising a cleaning chamber and a primary still for distilling said treatment fluid wherein said primary still is connected to said cleaning chamber, which is characterized by a secondary still connected in series to said primary still.

The inventive method for cleaning articles comprises the steps of
- placing said articles in a cleaning chamber,
- treating said articles with a treatment fluid comprising a densified gas,
- draining at least a part of said treatment fluid from said cleaning chamber and distilling said part of said treatment fluid in a primary still,
wherein
- at least a part of the treatment fluid is drained from said primary still,
- and said part of said treatment fluid removed from said primary still is distilled in a secondary still.

According to the invention the distillation is carried out in at least two steps. In the first step the treatment fluid which preferably comprises liquid carbon dioxide as densified gas is directed from the cleaning chamber to a primary still. In the primary still the main part of waste and contaminants is separated from the carbon dioxide by vaporising the carbon dioxide and blowing the resulting carbon dioxide vapour out of the primary still. The remaining treatment fluid in the primary still is passed to a secondary still for an additional distillation step. Thus, the separation of carbon dioxide and waste is considerably improved.

The term "still" shall mean any kind of tank, vessel or component which allows heating of a portion of the treatment fluid in order to vaporise carbon dioxide and thereby to separate the carbon dioxide from any other constituents of the treatment fluid, in particular to separate waste and contaminants from carbon dioxide. The still is preferably a separate component which is especially provided for distilling the treatment fluid. But the still can also be incorporated into another component such as the cleaning chamber, the working tank or a filter. In a broad sense, any component which provides for vaporisation and recovery of at least a part of the carbon dioxide from the treatment fluid shall be understood as a still.

The term "waste" shall mean any contaminants, additives, particles, chemicals, or detergents which shall be separated from the carbon dioxide. In particular, the term "waste" is not limited to valueless constituents but shall also cover expensive and/or reusable additives such as valuable chemicals.

The term "densified gas" shall in particular mean liquid or supercritical carbon dioxide.

In a preferred embodiment the volume of the secondary still is less than one-fifth of the volume of said primary still. The secondary still is designed for separating any residue liquid carbon dioxide from the waste which has been left after the distillation process in the primary still. Preferably more than 80%, more preferred more than 90% and even more preferred more than 95% of the liquid carbon dioxide of the treatment fluid is vaporised in the primary still. Thus, less than 20%, 10% or 5% of the liquid carbon dioxide, respectively, has to be treated in the secondary still and thus the ratio of the volume of the secondary still to the volume of the primary still is preferably less than 20%, more preferred less than 10%.

According to a preferred embodiment the secondary still has a volume of less than 25 litres, preferably less than 20 litres, more preferably less than 15 litres. Preferably the volume of the secondary still is between 2 and 20 litres whereas the primary still has a volume of more than 100 litres.

According to another preferred embodiment, the treatment fluid is distilled more than twice. First, the treatment fluid is passed to the primary still. The remaining non-vaporised treatment fluid is subsequently distilled in the secondary still as described above. After that second distillation step the remaining treatment fluid can be transferred to another still for an additional distillation. This embodiment of the invention is especially interesting if the treatment fluid comprises several different valuable constituents with different boiling points since it allows to recover not only the carbon dioxide but one or more of the other constituents of the treatment fluid, too.

Preferably, the secondary still is heated by water, in particular by cooling water used elsewhere within said cleaning system, or by any other warm fluid. It is also possible to provide the secondary still with other heating means for vaporising the treatment fluid and in particular the liquid carbon dioxide which has been transferred from the primary still to the secondary still. It is especially preferred to provide the secondary still with a water jacket and to pass warm water through the water jacket for heating the secondary still.

After distillation in the secondary still preferably all liquid carbon dioxide is separated from the waste. According to a preferred embodiment the remaining waste is then transferred to one or more waste receptacles by means of a pressure difference only. The pressure difference between the secondary still and the waste receptacle(s) is used to push the waste into the waste receptacle(s).

The term "waste collection point" shall cover any kind of drum, container, receptacle, canister or vessel which is suitable for storing the waste. In this description all these expressions are used as synonyms unless explicitly stated otherwise.

If for some reason the pressure within the secondary still is not sufficient to press all the waste to the waste receptacle or waste collection point it is advantageous to pressurize the secondary still with air or gaseous carbon dioxide.

It is preferred to maintain a pressure of between 1 and 1.5 bar within the whole tube or pipeline from the secondary still to the waste receptacle(s).

When waste/chemicals are moved from the primary still to the secondary still the pressure in the secondary still shall be 5 bar in order to prevent creation of carbon dioxide ice from left liquid carbon dioxide. Surprisingly, tests have shown that the preferable pressure to push waste / chemicals out of the secondary still is between 1 and 1.5 bars. 1 bar is needed to push all liquid out from the secondary still and if the pressure is more than 1.5 bars the waste/chemicals tend to splash due to the expansion of CO₂ left in the waste. In order to prevent icing of waste/chemicals drained from the secondary still it is preferred to raise the temperature above 30°C.

If the cleaning system comprises more than one cleaning machine and/or more than one secondary still, for example the cleaning system comprises several cleaning chambers each provided with a primary still and a secondary still, it is preferred to collect all the waste in one central waste collecting point remote from the cleaning machine, for example in a waste drum with a volume of 150 to 200 litres, instead of collecting the waste in several small canisters located close to the cleaning machines. According to another preferred embodiment different chemicals are collected in separate waste receptacles or separate chemical collection points.

According to another preferred embodiment the invention is used to recover valuable constituents of the treatment fluid. As in the prior art the primary still is used for separating carbon dioxide from the other constituents of the treatment fluid. The remaining treatment fluid is then subjected to a second distillation in the secondary still where a certain constituent, for example a valuable and/or expensive chemical which shall be re-used, is separated from the treatment fluid. Of course, it is also possible to first separate that certain constituent from the treatment fluid and subsequently separate the carbon dioxide. If the treatment fluid comprises several different and valuable chemicals or additives it might be advantageous to provide one or more additional secondary stills.

According to another preferred embodiment the inventive cleaning system comprises at least two or more primary stills, for example a system with two cleaning chambers with separate primary stills, wherein at least two of the primary stills are connected to the same secondary still.

The separation of the carbon dioxide from the waste in the secondary still is carried out by heating the secondary still and vaporising the carbon dioxide which then can be withdrawn in gaseous form. When liquid carbon dioxide evaporates the pressure in the secondary still will increase. In order to make sure that all carbon dioxide has been vaporised it is preferred to control the pressure in the secondary still and to heat up the secondary still as long as a pressure increase can be detected. If the pressure does not increase any more it can be assumed that all liquid carbon dioxide has been vaporised. Other preferred indicators for determining that all liquid carbon dioxide has been vaporised are
- the gas flow out of the secondary still, for example into the primary still, has stopped and/or
- the temperature in the secondary still is rising above the CO₂ saturation line.

Thus it is preferred to provide the secondary still with a pressure sensor. In addition, it is also helpful to have a temperature sensor for measuring the temperature within the secondary still in order to have a better control of the vaporisation process.

In industrial applications the user sometimes uses a large amount of chemicals that do not or not fully solve in the liquid CO₂ or chemicals are used in the process without liquid CO₂. This can be done with several steps/bath cycles with or without "flushes" of clean CO₂ between the steps/bath cycles. In this case it is preferable to collect the chemicals separately direct from the cleaning chamber to the secondary still instead to mix them with all other chemicals in the primary still. Even sometimes expensive chemicals are used in the process that can get destroyed if mixed with other chemicals, for example if a large amount of water based chemicals or other chemicals non fully mixable with liquid CO₂ are used in one bath. In case the chemical is heavier than liquid CO₂, it is preferred to first drain the fluid comprising CO₂ and the chemical into the secondary still. This drain will then include both the chemical and liquid CO₂. The secondary still will then distill the chemical in the same way as described above.

According to another preferred embodiment the treatment fluid in the primary still is additionally heated at a point below the main vaporiser of the primary still. This may be achieved by providing the primary still with a fluid collection cup at its bottom and heating the treatment fluid in the fluid collection cup. For example the fluid collection cup is provided with an electrical heater or the outlet of the fluid collection cup is connected to an indirect heat exchanger which heats up any fluid, waste or chemicals withdrawn from the primary still by indirect heat exchange with a heating medium.

This embodiment prevents liquid CO₂ to remain in the primary still and therefore it is easier to detect when waste and chemicals are blown out from the primary still or when only gaseous or liquid CO₂ is withdrawn form the primary still. Thus, this embodiment facilitates to stop the blow out in time to prevent blowing out gaseous CO₂. Such a system can also be used without a secondary still in order to lower the CO₂ consumption during blow outs.

The invention has several advantages compared to the prior art. The risk of blowing out waste to the atmosphere or to spaces inside or outside the cleaning machine, due to over pressure, is eliminated. Further, liquid and gaseous carbon dioxide are no more blown out of the cleaning machine or of the still and thus considerable savings of the carbon dioxide usage can be achieved. The CO₂ consumption during waste blow out will be reduced by at least 80% and in many cases by more than 90% up to more than 99%. The invention can be easily implemented in already existing cleaning machines.

One of the problems in the prior art is that not all liquid CO₂ is vaporised in the still and that therefore some or lot of liquid CO₂ is blown out when the still is emptied. By using the inventive system there is no more liquid CO₂ in the secondary still after the distillation.

In the following, the invention and preferred aspects of the invention are explained in detail with respect to the attached drawings.
- Figure 1: schematically illustrates a distillation system according to the invention,
- figure 2: shows a preferred embodiment and
- figure 3: shows another preferred embodiment.

The inventive cleaning system comprises a cleaning chamber in which the articles to be cleaned are introduced. The cleaning chamber can be designed in several ways: The cleaning chamber may comprise an internal basket to carry the material, articles, clothing or textiles which shall be cleaned. The basket may be arranged vertical or horizontal or rotatable. The cleaning chamber may be equipped with spray nozzles to improve the cleaning performance. Further the cleaning fluid may be circulated by a liquid pump.

The cleaning chamber is supplied with liquid carbon dioxide. Detergents or other additives may also be introduced into the cleaning chamber.

During the cleaning process the liquid carbon dioxide is contaminated with waste, detergent, chemicals or dye bleeding from the articles. For recycling of the carbon dioxide used in the cleaning process, there is arranged a primary still 1 connected via tube 2 to the cleaning chamber. In practice tube 2 may also be connected to the top of the primary still 1.

The primary still 1 is insulated and provided with a vaporiser 23 for vaporisation of liquid carbon dioxide 3. However, it is also possible to use a non-insulated primary still.

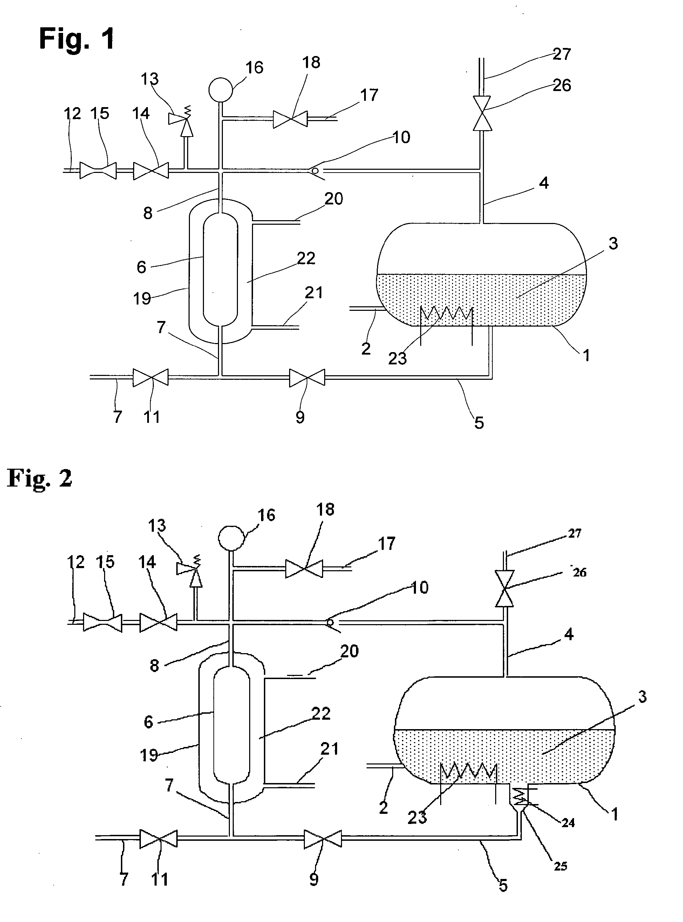

A gas line 4 with check valve 10 is connected to the top of still 1. The withdrawal of vaporised carbon dioxide from the primary still 1 during distillation is made by a T-connection to the gas line 4, that is through tube 27 and valve 26. It is also possible to have a separate gas withdrawal line connected to the top of the still (not shown in figure 1).

Any waste separated from the carbon dioxide is drained off through drain line 5 at the bottom of the primary still 1. Drain line 5 is provided with a waste blow out valve 9.

A secondary still 6 is also provided with a drain line 7 with drain valve 11 and gas line 8. Instead of having a common drain line 7 for transferring fluid from the primary still 1 to the secondary still 6 as well as for draining fluid from the secondary still 6 it is also possible to have separate lines. In this case the inlet line for feeding fluid into the secondary still 6 needs not necessarily to be located in the bottom of secondary still 6.

Drain line 5 and gas line 4 are connected to drain line 7 and gas line 8 of the secondary still 6, respectively. Drain line 7 is connected to a central waste collecting drum (not shown).

The top of the secondary still 6 is connected to an exhaust through tube 12 which is provided with a safety relief valve 13, a pressure relief valve 14 and a restrictor or manual needle valve 15. Figure 1 further shows a pressure sensor 16 connected to the top of secondary still 6 and a supply line 17 for pressurised air with an air inlet valve 18.

Line 12 can also be connected to a low pressure point in the cleaning machine or directly to the machine compressor or an additional compressor in order to recover even more CO₂. However, an additional compressor is another costly moving part and for that reason it is often avoided.

Such a low pressure point in the cleaning machine could be for example the cleaning chamber, which has a pressure range between 200 mbar to a cleaning pressure at approximate 40 to 70 bar. However, in this embodiment it has to be worked very carefully since in case of a mistake dirt might be blown into the cleaning chamber.

Another low pressure point in the cleaning machine is the suction side of a compressor. But this is only possible if the capacity of the compressor is high enough.

Another possibility is to connect line 12 to a larger tank which is added to the cleaning machine. Such a tank can for example be operated between 6 bar (or even lower) and approximately 20 to 25 bar. This tank may also balance the capacity of a compressor.

After the distillation the pressure in the primary still 1 is usually approximately 30 bar but can be increased to 40 bar or preferable up to 50 bar in order to improve the lifetime of the primary still 1. increasing the pressure in the primary still 1 means higher gas losses due to that less CO₂ will be transferred by line 4 from the secondary still 6 to the primary still 1 when running the distillation process in the secondary still 6.

Secondary still 6 is further provided with an outer shell 19 comprising a fluid inlet 20 and a fluid outlet 21. Fluid inlet 20 is preferably connected to the cooling water system of the cleaning system.

Operation of the inventive system shall now be explained by way of example.

After the cleaning step, the treatment fluid is drained from the cleaning chamber and passed to the primary still 1. In primary still 1 the treatment fluid is heated by vaporiser 23 whereby liquid carbon dioxide is vaporised. The resulting gaseous carbon dioxide is passed through valve 26 and tube 27 to the storage tank.

Next, the pressure in secondary still 6 is controlled by means of pressure sensor 16. If the pressure in secondary still 6 is lower than 5 bar air inlet valve 18 is opened and secondary still 6 is pressurized with air to a pressure above 5 bar in order to prevent the creation of carbon dioxide ice when liquid carbon dioxide is passed from the primary still 1 to the secondary still 6.

When the pressure in secondary still 6 is above 5 bar air inlet valve 18 is closed and waste blow out valve 9 is opened. Any left treatment fluid, that is liquid carbon dioxide, gaseous carbon dioxide and waste, is pressed through waste blow out valve 9 from the primary still 1 to the bottom of secondary still 6 until the secondary still 6 reaches the same pressure as the primary still 1. Waste blow out valve 9 is then closed again.

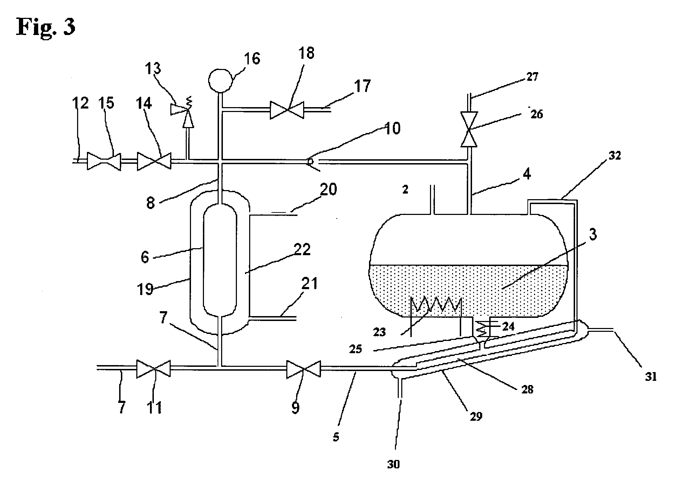

Tests have shown that the secondary still 6 can also be without pressure if valve 9 is close enough to the secondary still 6. In this case it is preferred to heat lines 5 and 7 in order to prevent icing. When transferring fluid, waste and/or chemicals from the primary still 1 to the secondary still 6 possible icing in tube 5 can be prevented by the mechanical construction, putting the inlet valve 9 for fluid, waste and/or chemicals to the secondary still 6 close to the secondary still 6, for example between 3 and10 cm from the inlet to the secondary still 6. The risk of ice formation when filling up the secondary still 6 is also very much reduced if an extra heating device 24 as illustrated in figure 2 or a double-jacketed heater 28, 29, 30 ,31 as shown in figure 3 is used.

Secondary still 6 is heated up by passing a heating medium, preferably used cooling water or any other warm water, through fluid inlet 20, the annular space 22 between outer shell 19 and secondary still 6, and fluid outlet 21.

By heating up the secondary still 6 the pressure within secondary still 6 will rise. Any overpressure in secondary still 6 is relieved by passing gas through gas line 8, check valve 10 and gas line 4 or drain line 5 to the primary still 1. The secondary still 6 may also be depressurised to the cleaning chamber (not shown). However, this is not preferred due to the risk of getting chemicals from the secondary still 6 into the cleaning chamber.

Secondary still 6 is heated such that all liquid carbon dioxide vaporises. It is assumed that all liquid carbon dioxide has been vaporised and that there is no more liquid carbon dioxide in the secondary still 6 if one or more of the following is detected:
- no further increase of the pressure in the secondary still 6
- no more gas flow from the secondary still 6 to the primary still 1 and/or
- the temperature in the secondary still 6 is rising above the CO₂ saturation line

Then the pressure in secondary still 6 is decreased by opening pressure relief valve 14 and manual needle valve 15 until a suitable pressure for further handling and transporting the waste is achieved. After closing valves 14 and 15 drain valve 11 is opened and the waste is transported by the remaining pressure through drain line 7 to a central waste collection point, for example a waste drum.

Prior to the invention it was assumed that during the waste draining step the pressure in the secondary still 6 should not fall below 5 bar in order to avoid ice formation in drain line 7. It was thought that the pressure of the waste withdrawn from secondary still 6 should be kept at minimum 5 bar to a point very close to the waste collection point or waste drum. However, tests have shown that the waste from the secondary still 6 does not contain any liquid CO₂ and therefore it is not necessary to keep the pressure in line 7 above 5 bar. In fact, it is preferred to have a pressure in the secondary still 6 and in tube 7 between 1 and 1.5 bar.

If for some reason there is not enough pressure left in the secondary still 6 to blow out the waste to the waste collection point it is possible to pressurise the secondary still 6 with compressed air via air supply line 17 and air inlet valve 18. It is also possible to connect a carbon dioxide supply to air inlet valve 18 and to pressurise the secondary still 6 with carbon dioxide gas. However, this might only be necessary with special mechanical constructions of the secondary still 6 and/or the drain line 7. Normally, the secondary still 6 can be emptied with more or less no overpressure at all.

In a preferred embodiment drain line 7 is provided with a flow meter. The flow meter can be used to better control the withdrawal of waste from secondary still 6 to the waste collection point. Other possibilities to control the waste flow are a capacitive sensor inside drain line 7 or an ultra sound detector attached to the drain line 7 from outside.

Preferably the transport of waste through line 7 is carried out at a pressure between 1 and 1.5 bar and the transport is controlled by the pressure gauge 16. But it is also possible to feed the waste through line 7 by means of a pump or a similar device.

The efficiency of the heating device 23 in the primary still 1 is very much reduced in the end of the distillation due to less contact with the treatment fluid in the primary still 1. Figure 2 shows a preferred embodiment of the invention in order to overcome that problem. A fluid collection cup 25 is added to the primary still 1 at the bottom of still 1 such that collection cup 25 forms the lowest point of primary still 1. Either vaporiser 23 is designed in such way that it reaches the primary still fluid collection cup 25 and heats up any treatment fluid in that cup 25. Or, as shown in figure 2, collection cup 25 is provided with an extra heat exchanger 24 to heat up and vaporise the treatment fluid 3.

In this way more CO₂ will be vaporised and the waste in the primary still 1 will have less concentration of CO₂. Heating up the bottom waste will also help to distill the liquid CO₂ in the distiller in a more sufficient way. The remaining waste in the primary still will be more concentrated and contain less CO₂.

Figure 3 shows another alternative to improve the distillation in the primary still 1. The outlet of fluid collection cup 25 is connected to a heat exchange passage 28 which is surrounded by pipe 29 forming an annular gap between passage 28 and pipe 29. A heating medium such as warm or hot water is supplied via inlet 30 to the annular gap and withdrawn through outlet 31. The piping system 28, 29, 30, 31 below the primary still 1 is relative cheap and can easily be changed to fit the application (volume of distillate, temperature etc.)

Any gas in the heat exchange passage 28 is fed back to the primary still 1 through tube 32 to prevent backflow through the fluid collection cup 25. The heated waste or chemicals are blown out from the bottom part of the heat exchange passage 28 through tube 5 and valve 9.

Heat exchange passage 28 is preferably tilted or inclined to collect the waste in the bottom part of the passage 28. The heat exchange passage 28 can also be a bundle made of several tubes or a small bottle. The heat exchange passage 28 and tube 32 have to be large enough to allow waste and chemicals to boil out CO2 without pressing back waste and chemicals to the primary still 1.

### List of reference signs:

- 1: primary still
- 2: tube
- 3: liquid carbon dioxide
- 4: gas line
- 5: drain line 5
- 6: secondary still
- 7: drain line
- 8: gas line
- 9: waste blow out valve
- 10: check valve
- 11: drain valve
- 12: tube
- 13: safety relief valve
- 14: pressure relief valve
- 15: restrictor or manual needle valve
- 16: pressure sensor
- 17: supply line
- 18: air inlet valve
- 19: outer shell
- 20: fluid inlet
- 21: fluid outlet
- 22: annular space
- 23: vaporiser
- 24: heater
- 25: fluid collection cup
- 26: valve
- 27: tube
- 28: heat exchange passage
- 29: pipe
- 30: inlet
- 31: outlet
- 32: tube

## Claims

1. System for cleaning articles in a treatment fluid (3) comprising a densified gas, said system comprising a cleaning chamber and a primary still (1) for distilling said treatment fluid (3) wherein said primary still (1) is connected to said cleaning chamber, **characterized by** a secondary still (6) connected in series to said primary still (1).

2. System according to claim 1, **characterized in that** the volume of said secondary still (6) is less than one-fifth of the volume of said primary still (1).

3. System according to any of claims 1 or 2 **characterized in that** said secondary still (6) has a volume of less than 25 litres, preferably less than 20 litres, more preferably less than 15 litres.

4. System according to any of claims 1 to 3 **characterized in that** said system comprises more than one cleaning chamber and more than one secondary still (6) wherein at least two, preferably all, of said secondary stills (6) are connected to a common waste collection point.

5. Method for cleaning articles comprising the steps
- placing said articles in a cleaning chamber
- treating said articles with a treatment fluid (3) comprising a densified gas
- draining at least a part of said treatment fluid (3) from said cleaning chamber and distilling said part of said treatment fluid (3) in a primary still (1)
**characterized in that**
- at least a part of the treatment fluid (3) is drained from said primary still (1)
- and that said part of said treatment fluid (3) removed from said primary still (1) is distilled in a secondary still (6).

6. Method according to claim 5 **characterized in that** said densified gas is carbon dioxide, preferably liquid carbon dioxide.

7. Method according to any of claims 5 or 6 **characterized in that** said part of said treatment fluid (3) removed from said primary still (1) is heated by water, in particular by used cooling water.

8. Method according to any of claims 5 to 7 **characterized in that** said treatment fluid (3) is heated in said secondary still (6) until the pressure in said secondary still (6) does no more increase.

9. Method according to any of claims 5 to 8 **characterized in that** after said distillation step in said secondary still (6) remaining waste is transferred to a waste collection point by means of a pressure difference only.

10. Method according to any of claims 5 to 9 **characterized in that** during the transfer of at least a part of said treatment fluid from said primary still (1) to said secondary still (6) the pressure in said secondary still (6) is at least 5 bar.

11. Method according to any of claims 5 to 10 **characterized in that** after said distillation step in said secondary still (6) said treatment fluid (3) is distilled once again in another still.
